Europäisches Patentamt

**European Patent Office**

**Office européen des brevets**

(19)

(11) Numéro de publication: **0 038 082**
**A1**

# (12) DEMANDE DE BREVET EUROPEEN

(21) Numéro de dépôt: **81102905.7**

(22) Date de dépôt: **15.04.81**

(51) Int. Cl.³: **B 62 D 53/08**

(30) Priorité: **16.04.80 FR 8008507**

(43) Date de publication de la demande: **21.10.81**
**Bulletin 81/42**

(84) Etats contractants désignés: **BE DE FR GB IT**

(71) Demandeur: **TRANSPORTS SAVIN, Société Anonyme dite, Boulevard Pierre Lefaucheux, F-72100 Le Mans (FR)**

(72) Inventeur: **Merger, Fernand, 153 rue de Funay, F-72026 Le Mans (FR)**

(74) Mandataire: **Casalonga, Axel et al, BUREAU D.A. CASALONGA OFFICE JOSSE & PETIT Lilienstrasse 77, D-8000 München 80 (DE)**

(54) **Véhicules routiers articulés par attelage porteur tracteur.**

(57) Véhicules routiers articulés par attelage porteur-tracteur.

Véhicule routier articulé à grande capacité comportant au moins deux parties principales porteuses de charges articulées entre elles par un attelage, caractérisé par le fait que ledit attelage (25) comporte une pièce résistante (1) faisant fonction de croisillon de cardan et susceptible de tourillonner autour d'un axe horizontal (2) dans une des parties (3) et de tourillonner autour d'un axe vertical (4) dans l'autre des parties (5) avec en outre des butées axiales (21, 23, 24) susceptibles de transmettre des charges dans le sens de l'axe vertical (4.).

# Véhicules routiers articulés par attelage porteur tracteur.

L'invention concerne les véhicules routiers articulés de grande capacité de transport.

On sait que dans les divers pays les réglementations imposent un maximum aux dimensions, à la charge totale et à la charge par essieu des véhicules routiers, ainsi qu'aux possibilités de braquage, et naturellement les valeurs imposées sont plus favorables pour les véhicules articulés du type comportant une remorque articulée derrière un camion tracteur ou un semi-remorque. Or, il est évident que pour une question de rentabilité, chaque transporteur routier cherche à obtenir la plus grande capacité de transport, tant en volume qu'en charge, tout en respectant ces réglements.

Du point de vue du volume, l'utilisation habituelle pour la remorque d'un dolly avec timon triangulaire s'accrochant sur le véhicule remorqueur oblige, pour permettre le débattement sans que la caisse de la remorque ne rencontre la caisse du tracteur, à respecter une distance d'environ 1,50m entre les deux caisses, ce qui correspond par conséquent à une perte importante de volume utile sur la longueur totale, généralement limitée à 18 mètres. D'autre part du point de vue de la charge, la règle imposant un maximum de charge de 13 tonnes par essieu non directeur, et d'autre part le fait que l'articulation entre les deux parties du véhicule ne peut généralement pas reporter de charge d'une partie sur l'autre, ne permet pas de répartir longitudinalement les charges et les essieux de l'ensemble routier comme on le désirerait.

Le but de l'invention est d'améliorer les capacités de chargement, en volume comme en poids, d'un véhicule routier articulé, notamment par le perfectionnement de l'articulation entre les deux parties principales.

L'invention consiste à interposer, entre les deux parties principales porteuses de charges du véhicule routier, une pièce rigide analogue à un croisillon de cardan qui s'articule autour d'un axe horizontal transversal par rapport au véhicule tracteur et autour d'un axe vertical par rapport à la remorque ou qui s'articule de façon inverse, l'ensemble étant agencé de manière à résister aussi bien aux efforts de traction qu'aux charges verticales et qu'aux mouvements de torsion longitudinale.

En variante l'articulation sur l'un des véhicules peut se faire non directement sur ce véhicule mais par l'intermédiaire d'une fourche articulée autour d'un axe longitudinal pour annuler les efforts résultant de ces mouvements de torsion.

Grâce à cette faculté de reporter des charges par l'intermédiaire de l'articulation, la répartition longitudinale de l'articulation elle-même et des divers essieux porteurs peut être déterminée plus librement de manière à améliorer les performances.

D'autres particularités de l'invention apparaîtront dans la description qui va suivre de divers modes de réalisation pris comme exemples et représentés sur le dessin annexé sur lequel :

la figure 1 représente l'articulation en coupe verticale selon II de la figure 2;

la figure 2 est une vue partielle de dessus de cette articulation;

la figure 3 est une vue en élévation d'une application à un véhicule porte-véhicules;

la figure 4 est une vue en élévation d'une autre application à un véhicule articulé du type fourgon;

la figure 5 est une vue partielle de dessus d'ensemble de la figure 4;

la figure 6 représente en élévation une troisième application à un véhicule articulé du type fourgon sans séparation intermédiaire;

la figure 7 est une vue de dessus de l'ensemble de la figure 7 en train d'exécuter un virage; et

la fig. 8 est une vue partielle en élévation de la variante de réalisation de l'articulation annulant les efforts de torsion.

L'invention consiste à utiliser entre les deux parties principales, c'est-à-dire entre les deux parties porteuses de

3

charges de l'ensemble routier articulé, un attelage porteur
tracteur d'un type particulier. Naturellement lorsque le véhicule tracteur est lui-même constitué par un ensemble semi-remorque, l'articulation entre le tracteur et sa remorque se
trouve constituée à la manière habituelle et l'invention ne
concerne alors que l'articulation entre la deuxième remorque
et la première remorque du semi-remorque.

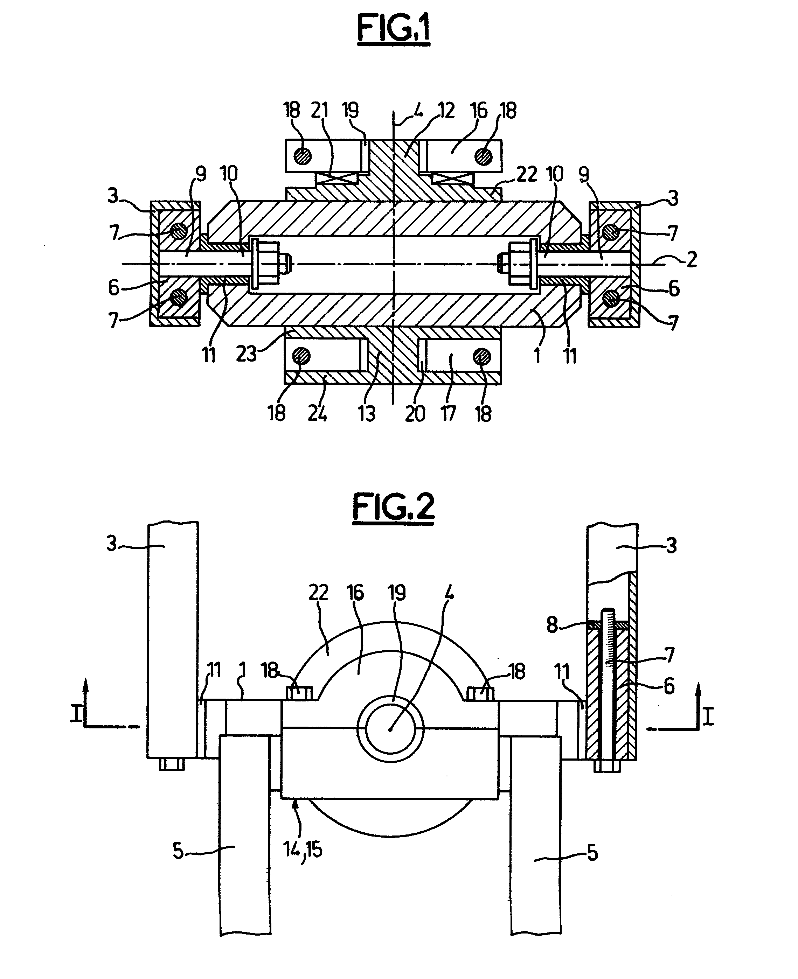

Comme il apparaît sur les figures 1 et 2, cette articulation spéciale est constituée essentiellement par une pièce
rigide 1 qui joue le rôle d'un croisillon de cardan et s'articule autour d'un axe horizontal transversal 2 dans le châssis
3 de la partie tractrice et autour d'un axe vertical 4 dans le
châssis 5 de la partie tractée.

Comme on le voit sur la figure 1, les poutres en U du
premier châssis 3 peuvent recevoir chacune à leur extrémité un
bloc 6 fixé par exemple au moyen de vis longitudinales 7 dans
une cloison 8 soudée dans chacune de ces poutres, et chacun de
ces blocs comporte un arbre 9 dont l'extrémité 10 faisant
saillie vers l'intérieur permet l'articulation du croisillon 1
au moyen de garnitures 11 placées dans un alésage correspondant. Naturellement la disposition inverse est également
possible, c'est-à-dire d'avec des bouts d'arbre faisant saillie au-delà du croisillon 1 et tourillonnant à l'intérieur des
blocs 6.

Le croisillon 1 comporte d'autre part deux bouts d'arbre
verticaux 12 et 13 d'axe 4 qui viennent tourillonner respectivement dans un palier supérieur et dans un palier inférieur,
chacun de ces paliers étant constitué par un demi-palier, 14
pour le supérieur, 15, pou l'inférieur, refermé par un demi-
collier, 16 pour le supérieur, 17 pour l'inférieur. Chacun des
demi-colliers 16 ou 17 est fixé dans le demi-palier correspondant à l'aide de vis 18. Ceci permet une séparation facile des
deux parties principales porteuses de charge par simple dévissage des vis 18, bien qu'une telle séparation reste en principe occasionnelle.

Naturellement des garnitures de friction ou de roulement
19 et 20 sont interposées entre les bouts d'arbre 12 et 13 et

4

les paliers correspondants, et en outre d'autres garnitures ou des roulements à aiguilles 21 sont disposés entre le palier supérieur et un plateau 21 solidaire du croisillon 1 et entourant le bout d'arbre 12 afin de permettre le report des charges verticales. Du côté inférieur il est également prévu unplateau 23 solidaire du croisillon et éventuellement un autre plateau 24 d'extrémité permettant également le repport éventuel de charges verticales.

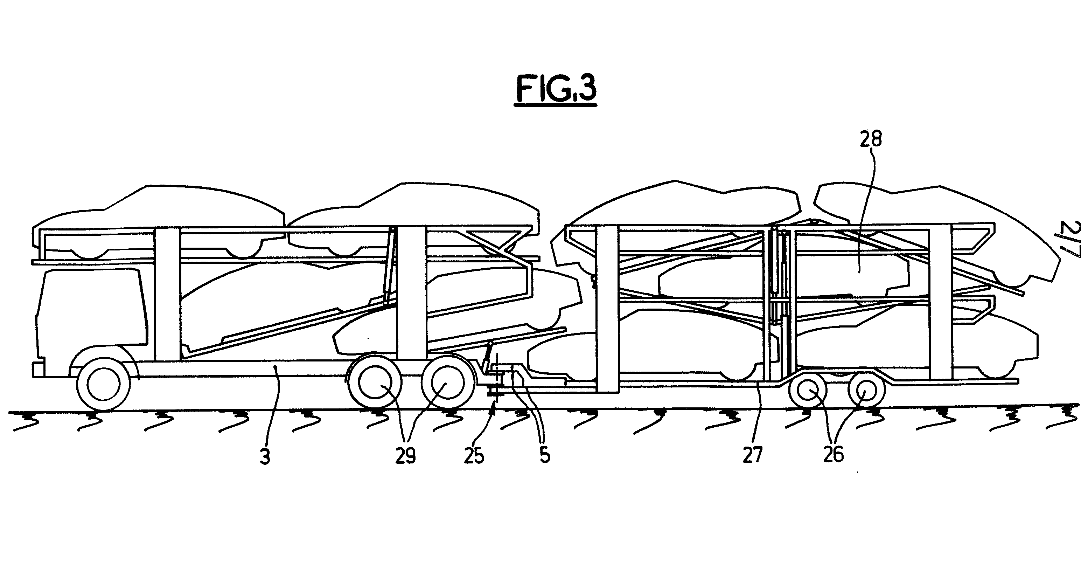

En effet le châssis 5, comme il apparaît notamment sur la figure 3, est en forme de fourche avec une partie supérieure supportant le palier supérieur et une partie inférieure supportant le palier inférieur, chacune de ces parties étant susceptible de travailler à la flexion et de reporter si nécessaire une partie des charges verticales.

L'ensemble ainsi constitué permet par conséquent non seulement d'assurer la transmission des efforts de traction ou de freinage entre les deux parties principales porteuses de charges, mais également de reporter des charges verticales de l'une vers l'autre et d'assurer la transmission d'un couple de torsion, c'est-à-dire d'empêcher tout mouvement de roulis de l'une des parties par rapport à l'autre. En outre, les axes 9 sont munis à l'intérieur du croisillon 1 d'écrous dits "contre-écrous" ou "écrous de sûreté" empêchant le desserrage, maintenant la solidarité de l'ensemble et interdisant toute rupture d'attelage.

La figure 3 illustre une première application de cet attelage à un véhicule porte-véhicules. On sait en effet qu'avec les dimensions usuelles des véhicules de tourisme et les dimensions maximum rappelées plus haut pour les véhicules porte-véhicules, ces derniers ne peuvent en général transporter que huit véhicules en raison notamment de la position et de l'encombrement de l'essieu ou des essieux porteurs de la remorque qui se trouve nécessairement placé sensiblement au milieu de celle-ci pour éviter un report de charge sur l'attelage. Au contraire grâce à l'attelage selon l'invention, désigné globalement par 25 sur la figure 3, il est possible de reculer les essieux porteurs 26 de la remorque 27, ce qui permet, en abaissant les deux voitures du niveau inférieur, de rajouter une neuvième voiture désignée par 28 sur la figure, ce qui accroît d'une manière importante la capacité de transport. Bien entendu ce déplacement des essieux 26 se traduit par un report de charge sur l'articulation 25, les essieux 29 étant alors déterminés et positionnés en conséquence.

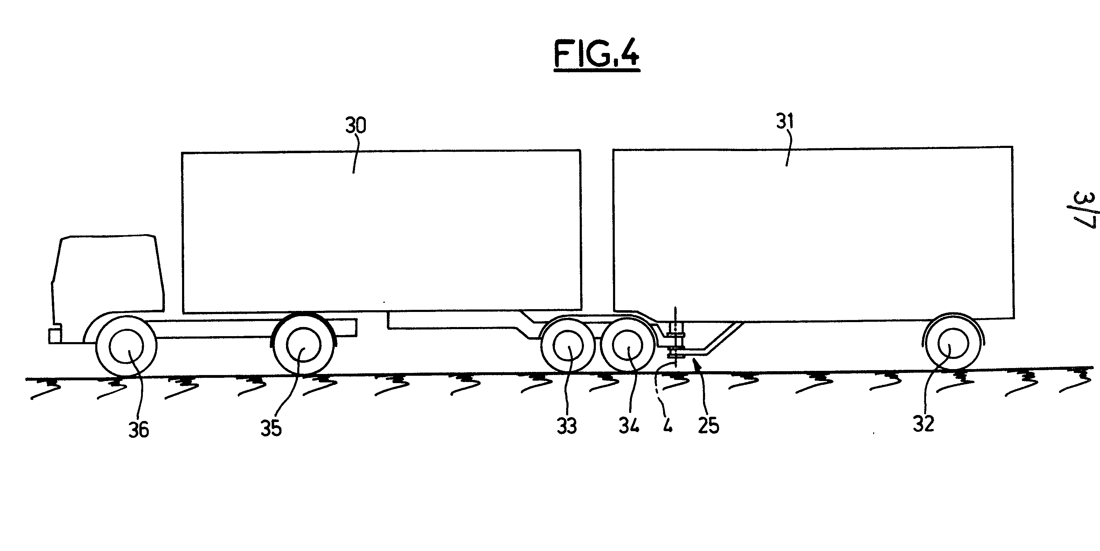

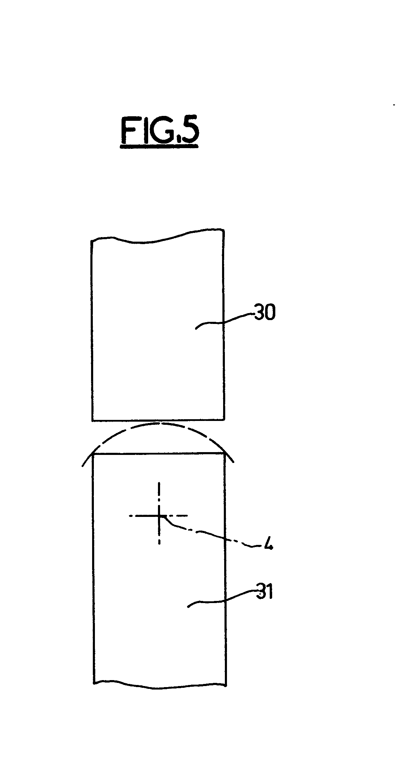

Un autre exemple d'application représenté sur les figures 4 et 5 concerne un véhicule du type fourgon avec deux caisses séparées 30 et 31, la première appartenant au véhicule-tracteur, ici un semi-remorque, et la seconde à la partie tractée. Dans ce cas comme rappelé plus haut il est habituel de disposer à l'arrière de la remorque 31 un essieu fixe 32 et à l'avant de celle-ci un dolly articulé par un timon triangulaire à l'arrière de la caisse 30. Cela oblige comme on l'a vu, à laisser subsister entre les deux caisses un espace d'environ 1m50 à 1m60 pour éviter la rencontre des caisses 30 et 31 au cours des virages. Au contraire avec l'invention, le dolly peut être supprimé et l'articulation 25 selon l'invention placée de manière que son axe 4 soit disposé comme représenté sur la figure 5, c'est-à-dire très en arrière de l'avant de la caisse 31. De cette manière le débattement relatif de la caisse 31 par rapport à la caisse 30, illustré par le tracé en trait interrompu sur la figure 5, ne nécessite qu'un vide d'environ 50 à 60 cm. En contrepartie naturellement la charge est reportée sur le véhicule tracteur 30 qui peut la supporter, par exemple à l'aide de deux essieux porteurs 33 et 34, ces derniers pouvant éventuellement être disposés comme représenté sur la figure 4 au-delà de l'arrière de la caisse 30. On peut ainsi avec les dimensions permises transporter deux caisses 30 et 31 de 54 m$^3$ chacune tout en assurant la répartition des charges contenues sur quatre essieux porteurs 35, 33, 34 et 32 de 10 à 13 tonnes chacun, en plus de l'essieu directeur 36 limité à 6,5 tonnes. Il en résulte par conséquent un gain de volume de 6 à 8 m$^3$, un gain de charge appréciable et une consommation d'énergie rapportée à l'unité transportée, une économie liée à l'accroissement du volume utile et à celui de la charge transportable.

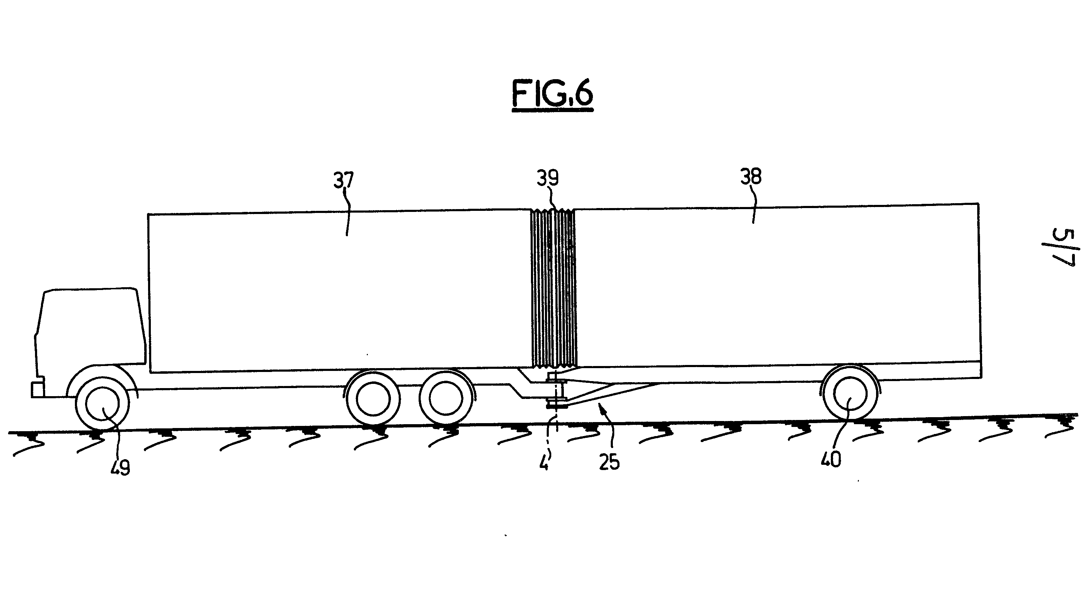

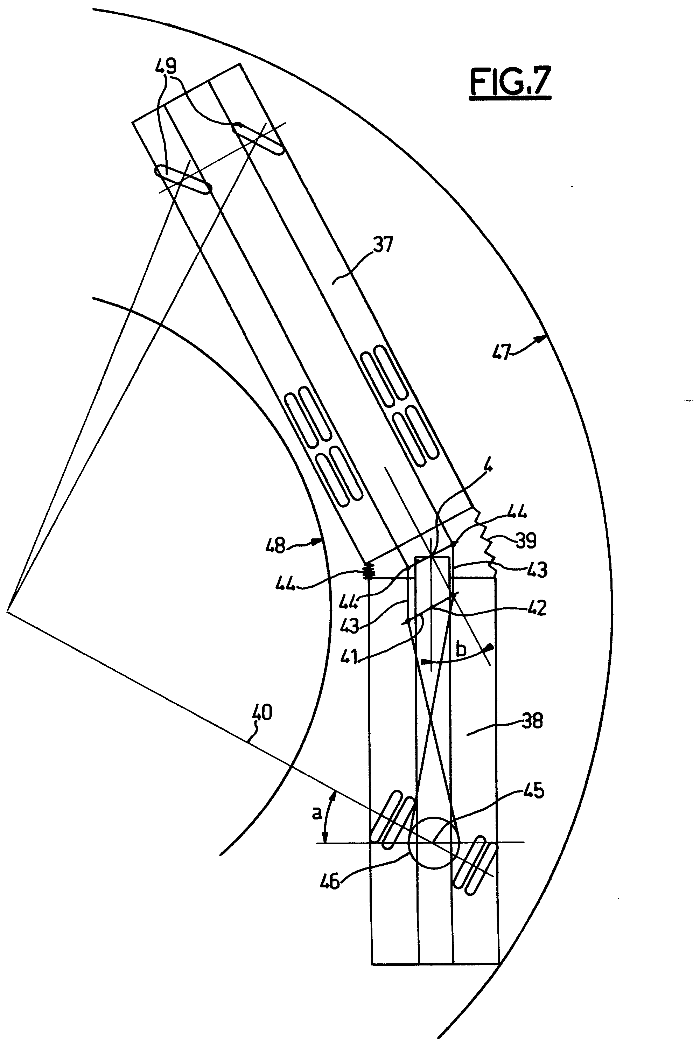

Le troisième exemple d'application, représenté sur les figures 6 et 7, concerne également un véhicule articulé du type fourgon mais dont les deux caisses 37 et 38 sont raccordées par un soufflet 39 pour permettre un chargement continu depuis l'arrière. Dans ce cas pour respecter le débattement du soufflet 39, l'axe d'articulation 4 de l'attelage 25 selon l'invention est naturellement disposé au milieu de l'épaisseur du soufflet, entre les deux caisses 37 et 38, et pour éviter la rencontre des deux caisses dans les virages, on utilise pour la remorque 38 conformément à l'invention, un essieu arrière 40 directeur couplé avec l'attelage 25 par une commande appropriée de manière que l'angle de braquage désigné par a sur la figure 7 soit égal mais de sens opposé à l'angle b que fait la remorque 38 par rapport à la partie tractrice 37. Cette commande consiste de préférence en un palonnier 41 articulé en 42 sur la remorque et couplé par deux bielles 43 à deux points d'articulation écartés 44 du châssis 3, de part et d'autre de l'attelage 25 de manière à constituer un parallélogramme articulé. Le palonnier 41 tourne par conséquent constamment de l'angle b par rapport à la remorque, de dételage étant par contre très facilité par découplement des bielle 43. En outre un autre mécanisme assure une transmission entre l'axe 42 et l'axe 45 de l'essieu arrière directeur 40 pour assurer des rotations égales mais de sens opposé. Ce mécanisme peut être constitué par une ou deux bielles croisées ou encore par un dispositif de câble à brins croisés s'enroulant sur un tambour 46.

Lorsque l'angle b, et par conséquent l'angle a, atteignent une valeur d'environ 35°, comme représenté sur la figure 7, l'ensemble du véhicule articulé vire à l'intérieur d'un cercle 47 de 12 mètres de rayon tout en restant à l'extérieur d'un cercle 48 de 6,50 m de rayon conformément au réglement, et dans ces conditions le soufflet 39 se trouve du côté intérieur au virage à son écrasement maximum. Dans ces conditions, un dispositif approprié non représenté, tel qu'un contact électrique et un voyant ou un répétiteur sonore, prévient le conducteur qu'il ne doit plus braquer davantage, à moins que ses roues directrices 49 soient elles-mêmes déjà leur angle de braquage maximum. Le tracé de la figure 7 montre que la présence de la remorque 38 ne change que peu de chose aux possibilités de braquage du véhicule 37 seul.

Naturellement cette dernière solution n'est encore possible que grâce au repport de charge du véhicule tracté 38 sur le véhicule tracteur 37 par l'intermédiaire de l'attelage selon l'invention.

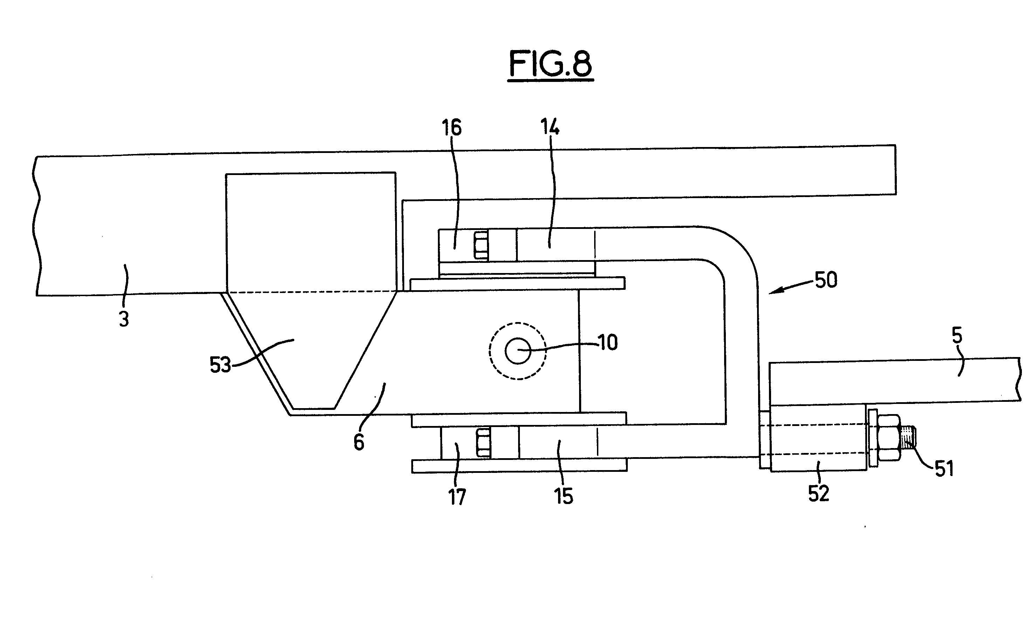

Dans la variante de réalisation de l'articulation selon la fig. 8, les demi-paliers 14 et 15, au lieu d'être directement fixés dans le châssis 5 de la partie tractée, sont réunis entre eux par une fourche 50, elle-même articulée autour d'un axe longitudinal 51 dans un palier 52 porté par le châssis 5. Ce montage indirect par l'intermédiaire d'un troisième axe permet d'annuler tout effort de torsion entre les deux parties de véhicule articulées lorsque celles-ci évoluent sur une chaussée très déformée.

Les demi-colliers 16 et 17 sont fixés de la même façon dans les demi-paliers 14 et 15 de cette fourche 50 pour recevoir les bouts d'arbre verticaux 12 et 13 du croisillon de cardan 1 dont les axes horizontaux 10 sont fixés de la même façon dans des blocs 6, eux-mêmes sont fixés au châssis 3, par exemple au moyen de goussets 53. La disposition inverse est également possible.

## REVENDICATIONS

1. Véhicule routier articulé à grande capacité comportant au moins deux parties principales porteuses de charges articuculées entre elles par un attelage, comprenant une pièce résistante (1) faisant fonction de croisillon de cardan et susceptible de tourillonner dans une des parties (5) autour d'un axe vertical (4) muni de butées axiales (21, 23, 24) susceptibles de transmettre des charges dans le sens de l'axe vertical (4), caractérisé par le fait que ledit croisillon de cardan (1) est en outre susceptible de tourillonner dans l'autre des parties (3) autour d'un axe horizontal (2) transversal à l'axe de cette partie (3).

2. Véhicule routier selon la revendication 1, caractérisé par le fait que la remorque comporte une partie avant (5) en forme de fourche solidaire d'un demi-palier supérieur (4) et d'un demi-palier inférieur (15), coopérant l'un et l'autre avec deux demi-colliers amovibles (16, 17) pour constituer les paliers de tourillonnement et de butée axiale des deux bouts d'axe verticaux (12, 13) du croisillon (1).

3. Véhicule routier selon l'une quelconque des revendications précédentes, caractérisé par le fait que la partie remorquée (27, 31, 38) est supportée par un essieu simple ou double (26, 32, 40) disposé en arrière du centre de gravité de cette partie de manière qu'une partie de la charge portée par la remorque soit transmise à la partie tractrice par ledit attelage (25).

4. Véhicule routier selon la revendication 3, caractérisé par le fait que ledit attelage (25) est placé très en arrière de l'extrémité avant de la partie tractée (31) de manière à réduire l'intervalle nécessaire entre cette partie avant et la partie arrière du véhicule tracteur (30).

5. Véhicule routier selon la revendication 3, caractérisé par le fait que ledit attelage (25) est placé sensiblement au milieu de l'intervalle entre l'extrémité arrière de la partie tractrice (37) et l'extrémité avant de la partie tractée (38), et que ledit essieu (40) de la partie tractée est directeur, le braquage de celui-ci étant commandé à partir de l'angle relatif de rotation de la partie tractée (38) par rapport à la partie tractrice (37).

6. Véhicule routier selon la revendication 5, caractérisé par le fait que la partie tractée (38) comporte un palonnier (41) réuni par des bielles (43) au véhicule tracteur (37) pour constituer un parallélogramme articulé amovible, et un mécanisme de transmission assurant entre l'essieu directeur (40, 45) et le palonnier (41, 42) des rotations égales et opposées.

7. Véhicule routier selon l'une des revendications précédentes, caractérisé par le fait que l'un des deux axes (2,4) du croisillon de cardan (1) s'articule dans la partie de véhicule correspondante (3 ou 5) par l'intermédiaire d'une fourche (50), elle-même articulée autour d'un axe longitudinal (51) dans cette partie.

0038082

## FIG.1

## FIG.2

# FIG.3

# FIG.4

0038082

# FIG.5

## FIG.6

0038082

## FIG.7

FIG.8

0038082

## DOCUMENTS CONSIDERES COMME PERTINENTS

| Catégorie | Citation du document avec indication, en cas de besoin, des parties pertinentes | Revendication concernée |
|---|---|---|
| | FR - A - 1 295 960 (MADURAUD) <br> * En particulier le cas de la figure 4 * | 1,2,3 |
| | -- | |
| | DE - C - 837 055 (LINKE HOFFMANN) <br> * En entier * | 1,2 |
| | -- | |
| | FR - A - 2 339 507 (VENISSIEUX) <br> * Revendications 1,2 * | 1 |
| | -- | |
| | US - A - 3 860 257 (MESLY) <br> * En entier * | 1,5 |
| | -- | |
| A | FR - A - 2 125 093 (SEISAKUSHO) | 1 |
| A | FR - A - 2 263 123 (SAUVAGEOT) | 1 |
| A | FR - A - 2 272 881 ( SHELTON PROJECTS) | 1 |
| A | FR - A - 2 418 138 (ACKERMANN-FRUEHAUF) | 1 |
| A | US - A - 2 728 403 (JOY) | 1 |
| A | US - A - 3 151 881 (FREMONT) | 1 |
| A | US - A - 3 556 560 (ADAMS) | 1 |
| A | US - A - 3 880 440 ( TIDEWELL) | 1 |
| A | DE - A - 2 643 325 (DB) | 1 |
| | ----- | |

**CLASSEMENT DE LA DEMANDE (Int. Cl.³)**

B 62 D 53/08

**DOMAINES TECHNIQUES RECHERCHES (Int. Cl.³)**

B 60 D
B 62 D
B 60 P

**CATEGORIE DES DOCUMENTS CITES**

X: particulièrement pertinent
A: arrière-plan technologique
O: divulgation non-écrite
P: document intercalaire
T: théorie ou principe à la base de l'invention
E: demande faisant interférence
D: document cité dans la demande
L: document cité pour d'autres raisons

&: membre de la même famille, document correspondant

Le présent rapport de recherche a été établi pour toutes les revendications

| Lieu de la recherche <br> La Haye | Date d'achèvement de la recherche <br> 10-06-1981 | Examinateur <br> SCHMAL |
|---|---|---|